# EUROPÄISCHE PATENTSCHRIFT

(11) **EP 2 475 946 B1**
(45) Veröffentlichungstag und Bekanntmachung des Hinweises auf die Patenterteilung: **06.05.2015**
(21) Anmeldenummer: 10741977.2
(22) Anmeldetag: 12.08.2010
(51) Int. Cl.: F27B 7/20, F27D 17/00, C04B 7/36

(54) **VERFAHREN ZUR HERSTELLUNG VON ZEMENT MIT ABTRENNUNG VON CO2**
METHOD FOR PRODUCING CEMENT WITH SEPARATION OF CO2
PROCÉDÉS DE FABRICATION DE CIMENT AVEC SÉPARATION DE CO2

(30) Priorität: 10.09.2009 DE 102009041089
(43) Veröffentlichungstag der Anmeldung: 18.07.2012
(73) Patentinhaber: KHD Humboldt Wedag GmbH, 51067 Köln (DE)
(72) Erfinder: MATHAI, Robert, 779 00 Olomouc-Nové Sady (CZ)
(86) Internationale Anmeldenummer: PCT/EP2010/061748
(87) Internationale Veröffentlichungsnummer: WO 2011/029690

(56) Entgegenhaltungen:
- EP-A1- 1 923 367
- WO-A1-2010/012880
- DE-A1- 3 010 909
- US-A1- 2007 248 925

## Beschreibung

Die Erfindung betrifft Verfahren zur Herstellung von Zementklinker aufweisend die folgenden Schritte: Vorwärmen von Calciumcarbonat-haltigem Rohmehl in einer Vorwärmstufe, die durch Abgase einer in Gasströmungsrichtung nachgeschalteten Sinterstufe beheizt wird, Entsäuern des vorgewärmten Rohmehls, Sintern des entsäuerten Rohmehls zu Zementklinker in einer Sinterstufe, Kühlen des Zementklinkers aus der Sinterstufe in einer Kühlstufe, die den Zementklinker mit einem Gas kühlt.

In den weltweit am meisten ausgeübten Verfahren zur Herstellung von Zement wird ein Calciumcarbonat-haltiges Ausgangsmaterial in Form von Kalkstein durch Zufuhr von Wärme formell von CO₂ befreit und damit in ungelöschten Kalk, Calciumoxid, überführt und anschließend durch Zufuhr von noch mehr Wärme in Gegenwart von Silikat-haltigem Gestein zu Zementklinker gesintert, der aus verschiedenen Calciumsilikat-Phasen besteht und den Hauptanteil von gebräuchlichem Zement darstellt. Dabei wird pro kg Zementklinker eine Wärmeenergie zwischen 2.850 und 3.350 kJ eingesetzt. Die hierzu benötigte Wärmemenge wird in der Regel aus der Verbrennung von kohlenstoffhaltigem Brennstoff erzeugt. Die Verbrennung einerseits und die formelle Befreiung von CO₂ aus dem Kalkstein andererseits bilden zusammen eine intensive CO₂-Quelle, wobei das freigesetzte CO₂ bisher in die freie Erdatmosphäre eingeleitet wird. Der hierdurch erzeugte CO₂ -Ausstoß bildet einen nicht unerheblichen Beitrag zum gesamten anthropogenen CO₂ -Ausstoß auf der Erde. Es ist inzwischen bekannt, dass CO₂ Hauptverursacher eines erwarteten Treibhauseffektes ist, der zur unerwünschten Erwärmung der Erdatmosphäre führt. Man ist daher bestrebt, den CO₂ -Ausstoß weitgehend zu verringern.

Um den CO₂ -Eintrag in die Erdatmosphäre durch die Herstellung von Zement zu verringern, ist man darauf angewiesen, das freigesetzte CO₂ durch Einlagerung in unterirdischen Kavernen an dem Entweichen in die Erdatmosphäre zu hindern. Solche Kavernen sind beispielsweise größtenteils entleerte, natürliche Erdgas- oder Erdöllagerstätten. Da bei dem herkömmlichen Verfahren zur Herstellung von Zement sehr große Mengen von CO₂ entstehen, die mit noch weit größeren Mengen Stickstoff aus der atmosphärischen Luft gemischt sind, ist eine Einlagerung unter Verdichtung und Weiterleitung des Abgases zur Lagerstätte kaum wirtschaftlich möglich.

Beim bis heute bekannten Verfahren zur Herstellung von Zement ist es üblich, das Calciumcarbonat-haltige Ausgangsmaterial zu sogenanntem Rohmehl feinzumahlen und dann zunächst in einem Vorwärmer aufzuheizen. In dem Vorwärmer fällt das Rohmehl in Gasgegenstromrichtung durch die heißen Abgase eines Drehrohrofens, um die großen Mengen zu brennenden Kalksteins mit der Abwärme zunächst aufzuheizen. Je nach Ausgestaltung der Anlage ist dann vorgesehen, das Rohmehl in einem Schritt in einem Drehrohrofen zu entsäuern und zu Kalkstein zu sintern oder die Entsäuerung und die Sinterung in getrennten Anlagenteilen vorzunehmen. Die das Rohmehl aufwärmenden Gase, die aus Stickstoff, CO₂, geringen Mengen CO, nitrosen Gasen und weiteren Verbrennungsgasen bestehen, werden in manchen Anlagen sodann zur Abtrennung der noch in den Abgasen verbliebenen Wärme durch einen Wärmetauscher geleitet und sodann in die freie Erdatmosphäre freigesetzt.

Da die zur Vermeidung der CO₂-Emission anfallenden Abgasmengen sehr groß sind, schlägt die Europäische Patentanmeideschrift EP 1923367A1 vor, das bis dahin bekannte Verfahren zur Herstellung von Zement zu verändern. Vorwärmen und Entsäuern sollen nach dem Vorschlag der zuletzt genannten Patentanmeldung in räumlich getrennten Bereichen der Anlage vorgenommen werden, wobei die Abgase aus der Entsäuerung im Kreislauf unter starker Anreicherung von CO₂ geführt werden, so dass die Entsäuerung in einer CO₂-Atmosphäre durchgeführt wird. Das chemische Gleichgewicht liegt dabei durch die eingeführte Wärme auf der Seite von ungelöschtem Kalk. Die Abgase aus einem Drehrohrofen werden hingegen wie bekannt zum Vorwärmen des Rohmehls verwendet und sodann durch Freisetzung verworfen. Um die Restwärme der Drehrohrofenabgase nach Wärmetausch mit dem Rohmehl auszunutzen schlägt die zuletzt genannte Patentanmeldung vor, das Abgas mit Hilfe eines Wärmetauschers zu Gunsten der Erhitzung von Wasser zur Energieerzeugung abzukühlen, wobei Wasserdampf im zweiten Kreislauf des Wärmetauschers entsteht, der zum Antrieb von Dampfturbinen genutzt werden soll.

Das in der zuletzt genannten Patentanmeldung genannte Verfahren lässt somit das bei der Verbrennung von Kohlenstoff-haltigen Brennstoffen entstehende CO₂ immer noch in die Atmosphäre entweichen, wobei in der Regel im Drehrohrofen ca. 40% des gesamten in der Anlage verbrannten Brennstoffs umgesetzt werden. Ideal wäre es, wenn auch das hier entweichende CO₂ eingefangen und eingelagert werden könnte.

Aufgabe der Erfindung ist es deshalb, den Abtrennungsgrad der im Gesamtprozess entstehenden CO₂-Emissionen weiter zu erhöhen, um damit die CO₂-Emission weiter zu verringern.

Die erfindungsgemäße Aufgabe wird gelöst durch Vereinen der Abgase der Sinterstufe mit den Abgasen des Entsäuerns und Führen der vereinten Abgase im offenen Gaskreislauf.

Dadurch, dass beide CO₂-Gasquellen im offenen Gaskreislauf geführt werden, nämlich die Entstehung von CO₂ bei der Entsäuerung nebst der Entstehung von CO₂ aus der dazu notwendigen Wärmeerzeugung einerseits und die Entstehung von CO₂ aus der Wärmeerzeugung zum Sintern andererseits, ist es möglich den gesamten CO₂-Ausstoß einer Anlage zur Herstellung von Zement abzutrennen und einzulagern. Daneben hat der Einbezug auch der Abgase aus dem Drehrohrofen einen weiteren Vorteil, nämlich, dass entstehende nitrose Gase, Stickoxide oder auch NOₓ genannt, bei der Aufkonzentration von CO₂ im Kreislauf notwendigerweise die Konzentration von Luftstickstoff im Kreislaufgas verringert. Dadurch, dass weniger Luftstickstoff bei der Wärmeerzeugung im Drehrohrofen vorhanden ist, wird bei der Verbrennung auch weit weniger Luftstickstoff zu nitrosen Gasen verbrannt. Die Entstehung von nitrosen Gasen ist im Drehrohrofen weit stärker ausgeprägt als bei der Verbrennung in der Entsäuerungsstufe, weil im Drehrohrofen zur erwünschten Ausbildung verschiedender, erwünschter Calciumsilikat-Phasen als Zementklinker oxidative Bedingungen notwendig sind, bei denen zwangsläufig Stickstoff in der großen Hitze des Drehofenbrenners zu nitrosen Gasen oxidiert wird.

Das Vereinen der Abgase aus der Entsäuerungsstufe und der Sinterstufe ist aber nicht ohne weitere Änderungen des bekannten Verfahrens möglich. Eine scheinbar naheliegende Lösung, nämlich allein die Abgase des Drehrohrofens zusätzlich in den Kreislauf einzubeziehen, ist aus weiteren anlagentechnischen Gründen nicht ohne weiteres möglich, denn die Abgase aus dem Vorwärmer werden als Hebe- und Trocknungsluft in einer der Anlage zur Herstellung von Zementklinker aus Rohmehl vorgeschalteten Rohmehlmühle gebraucht. Das Ausgangsmaterial, aus dem Rohmehl zur Herstellung von Zementklinker erzeugt wird, ist in der Regel feucht, weil es beispielsweise aus dem Übertageabbau stammt, aber auch Hydratwasser enthält. Um beim Vorwärmen die energieintensive Erwärmung von mitgeschlepptem Wasser zu vermeiden, und auch, um den Mahlprozess unter Einsatz von Sichtern zu erleichtern, wird schon beim Mahlen darauf geachtet, dass das Rohmehl durch Verwendung der Vorwärmerabluft im Mahlprozess trocken ist. Der Mahlprozess ist kein geschlossener Prozess, das bedeutet, dass viele Stellen im Mahlprozess existieren, wo das Ausgangsmaterial bei der Zerkleinerung in freiem Kontakt mit der Erdatmosphäre steht. Würde man also die Abgase aus dem Drehrohrofen in den Kreislauf einbeziehen, so fehlten diese bei der notwendigen Vermahlung. Zur Lösung wäre es deshalb notwendig, den Mahlprozess gegenüber Falschluft abzudichten, was einen sehr aufwändigen apparativen Aufwand erfordert, oder man bedient sich einer hier erfindungsgemäßen, besonderen Variation des bisher bekannten Verfahrens zur Herstellung von Zement.

Um die Wärme, die aus dem Vorwärmer zum Vorwärmen des Rohmehls für die Trocknung des Ausgangsmaterials nutzen zu können, wird erfindungsgemäß vorgeschlagen, einen mindestens zweistufigen Kühler für den fertiggebrannten Zementklinker einzusetzen, der zwischen beiden Stufen beispielsweise einen Mittenbrecher aufweist, durch den eine Gastrennung zweier Gaskreisläufe möglich ist. Die erste Stufe des Kühlers ist in den offenen Gaskreislauf, in dem eine stark CO₂-angereicherte Gasatmosphäre vorliegt, einbezogen. Die zweite Stufe des Kühlers jedoch arbeitet wie in bekannten Anlagen mit atmosphärischer Luft, wobei die Kühlerabluft dieses Teils zum Heben und Trocknen des Ausgangsmaterials in der Mahlstufe verwendet wird. Da die Kühlerabluft der zweiten Mahlstufe jedoch nicht genügend Wärme mit sich trägt, um das gesamte Ausgangsmaterial zu trocknen, wird die Wärme aus dem Vorwärmer dazu verwendet, die in den Mahlkreislauf als Mahlumluft geleitete Kühlerabluft wieder aufzuwärmen nachdem diese aus der Mahlstufe unter Aufnahme von Feuchtigkeit aus dem Ausgangsmaterial abgekühlt ist. Die Erfindung macht sich also zu nutze, dass einerseits atmosphärische, erhitzte Luft in dem erfindungsgemäßen Verfahren und in der korrespondierenden Anlage aus der zweiten Kühlerstufe zur Verfügung steht, die nicht mit Abgasen, insbesondere mit CO₂ belastet ist, und andererseits macht sich die Erfindung die Wärme aus der Vorwärmstufe zu nutze, die durch den Einbezug in einen eigenen offenen Kreislauf unter Anreicherung der CO₂-Konzentration nicht ohne Weiteres der Mahlstufe zuzuführen ist, weil dort ein unerwünschter Falschlufteintrag stattfinden würde, der die Effektivität des Verfahrens unter Abtrennung von CO₂ verringern würde.

Besonders am erfindungsgemäßen Verfahren ist, dass es sowohl für den Umbau solcher Anlagen geeignet ist, in dem das Entsäuern und das Sintern in einer einzigen Stufe, einem längeren Drehrohrofen, geeignet ist, wie auch für Anlagen, in denen das Sintern und das Entsäuern in räumlich getrennten Anlagenteilen stattfindet.

Die Erfindung wird anhand der folgenden Figuren näher erläutert.

Es zeigen:

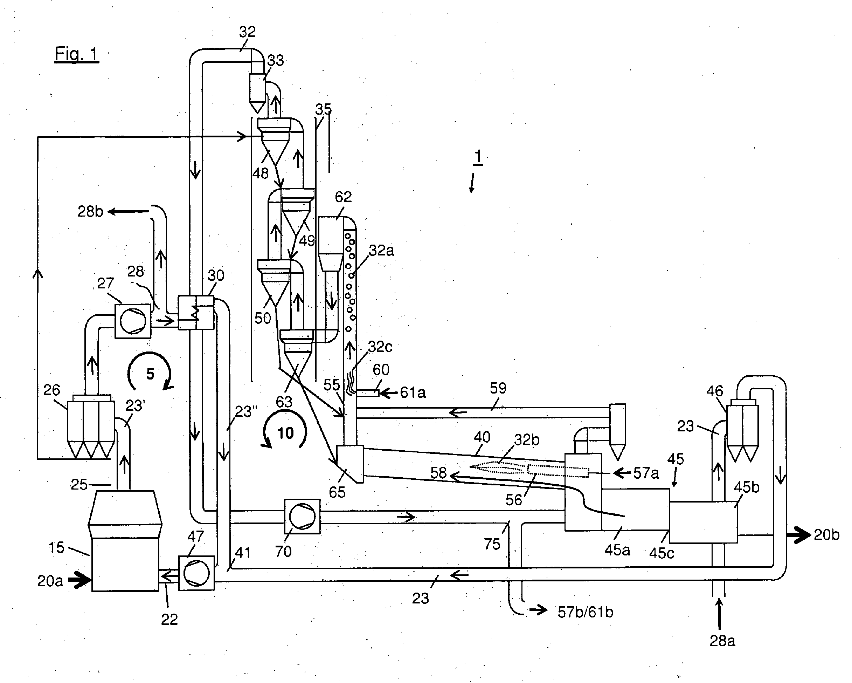

- Figur 1: eine Skizze einer erfindungsgemäßen Anlage zur Durchführung des erfindungsgemäßen Verfahrens.

In Figur 1 ist eine Skizze eines Ablaufschemas einer erfindungsgemäßen Anlage 1 zur Herstellung von Zementklinker aus Calciumcarbonat-haltigem Ausgangsmaterial dargestellt, die zwei wesentliche, voneinander getrennte, offene Gaskreisläufe 5 und 10 aufweist. Das Calciumcarbonat-haltige Ausgangsmaterial zur Herstellung von Zementklinker durchläuft diese zwei getrennten, offenen Gaskreisläufe 5 und 10, wobei es im ersten offenen Gaskreislauf 5 mit der Gasströmungsrichtung wandert und im zweiten offenen Gaskreislauf 10 größtenteils im Gegenfluss den Anlagenteil durchströmt, wobei der Materialfiluss des Calciumcarbonat-haltigen Ausgangsmaterials in Gaskreislauf 10 also der Gasströmungsrichtung größtenteils entgegengesetzt ist.

In dem ersten offenen Gaskreislauf 5, der vom zweiten offenen Gaskreislauf 10 abgetrennt ist, fließt ein Gasstrom zur Trocknung des Calciumcarbonat-haltigen Ausgangsmaterials und zur dessen Zerkleinerung zu Rohmehl in einer Vorwärmstufe 35 vorgeschalteten Mahlstufe 15, wobei die Vorwärmstufe 35 in Materialflussrichtung der Anlage 1 der Mahlstufe 15 nachgelagert ist.

In dem zweiten offenen Gaskreislauf 10 der Anlage 1 fließt hingegen ein Gasstrom, in welchem das Calciumcarbonat-haltige Rohmehl aus dem ersten offenen Gaskreislauf 5 zu Zementklinker umgewandelt wird.

In der gesamten Anlage 1 wird zur Herstellung von Zementklinker aus Calciumcarbonat-haltigem Rohmehl das Calciumcarbonat-haltige Ausgangsmaterial, in der Regel eine noch vom Übertageabbau feuchte Mischung aus Kalkstein und silikathaltigem Gestein, zunächst einer Mahlstufe 15 an Aufgabestelle 20a aufgegeben. In der Skizze ist als Mahlstufe 15 eine Vertikalmühle dargestellt, aber je nach Materialeigenschaften des Calciumcarbonat-haltigen Ausgangsmaterials sind auch Rollenpressen zur Hochdruckzerkleinerung, Kreislaufmahlanlagen mit verschiedenen Mahl- und Sichtstufen als Mahlstufe 15 geeignet. In der Mahlstufe 15 wird das Calciumcarbonat-haltige Ausgangsmaterial gleichzeitig soweit zu Calciumcarbonat-haltigem Rohmehl zerkleinert, dass es eine mehlartige Konsistenz aufweist und durch die in der Skizze an der Mahlstufe 15 von rechts an Stelle 22 ankommenden, trockenen Kühlerabluft 23 getrocknet. Dabei wird das zu zerkleinernde Calciumcarbonat-haltige Ausgangsmaterial in der Mahlstufe 15 durch die als Mahtumtuft 23' eingeleitete trockene Kühlerabluft 23 gehoben, wobei innerhalb der Mahlstufe 15 noch hier nicht eingezeichnete Sichter vorhanden sind, welche das Calciumcarbonat-haltige Rohmehl erst ab einem bestimmten Feinheitsgrad aus einem Mahlkreislauf ausschleusen. Nachdem das Calciumcarbonat-haltige Rohmehl die Mahlstufe 15 an Stelle 25 mit Hilfe der teilweise trockenen Kühlerabluft 23 und teilweise feuchten Mahlumluft 23' verlassen hat, wird es in einer Kaskade 26 aus Staubabscheidern von der nun erkalteten und feuchten Mahlumluft 23' getrennt. An dieser Stelle trennt sich der Weg des Calciumcarbonat-haltigen Rohmehls von der im offenen Gaskreislauf 5 befindlichen erkalteten und feuchten Mahlumluft 23'.

Die weitgehend entstaubte, feuchte Mahlumluft 23' verlässt die Kaskade 26 aus Staubabscheidern in nach oben weisender Richtung und wird durch einen Verdichter 27 verdichtet, um den Druckabfall im darauffolgenden Gas-Gas-Wärmetauscher 30 und dem Teilgasabzug 28 auszugleichen. Denn zwischen Verdichter 27 und Gas-Gas-Wärmetauscher 30 wird bei Stelle 28b ein Teil der feuchten Mahlumluft 23' entnommen, um die Feuchtigkeit aus dem Calciumcarbonat-haltigen Ausgangsmaterial mit der entnommenen, feuchten Mahlumluft 23' zu verwerfen und auch, um die im ersten Gaskreislauf 5 befindliche Gasmenge konstant zu halten, die fortwährend durch neue, atmosphärische Luft aus der Kühlerluftzufuhr 28a ersetzt wird. Gasverlust und Gasteintrag im ersten Gaskreislauf 5 finden aber nicht nur durch die Entnahme der feuchten Mahlumluft 23' bei Stelle 28b und Kühlerluftzufuhr 28a statt, sondern auch durch Falschluftein- und -austrag in der Mahlstufe 15. Da in der Mahlstufe 15 Falschluft in den ersten Gaskreislauf 5 eingebracht wird, aber auch feuchte Mahlumluft 23' aus dem ersten Gaskreislauf 5 entweicht, wird zwischen Verdichter 27 und Gas-Gas-Wärmetauscher 30 also, wie oben erwähnt, nur so viel feuchte Mahlumluft 23' entnommen, dass die in Gaskreislauf 5 befindliche Gasmenge konstant bleibt, da sie stets durch warme und noch trockene Kühlerabluft 23 an Stelle 22 ersetzt wird, wobei die trockene Kühlerabluft 23 aus der zweiten Stufe 45b des zweistufigen Kühlers 45 stammt, in der mit atmosphärischer Luft der fast fertige Zementklinker gekühlt wird. Diese atmosphärische Luft wird an Stelle 28a in die Anlage eingeführt. Der hier beschriebene offene Gaskreislauf 5 ist offen, das bedeutet, neues Gas, Kühlerabluft 23, wird in den offenen Gaskreislauf 5 eingeführt und Gas, feuchte Mahlumluft 23', verlässt den offenen Gaskreislauf 5. Dabei wird im Rahmen dieser Offenbarung unter einem 'offenen Gaskreislauf' ein Gaskreislauf verstanden, der kontinuierlich mit Gas beschickt und von Gas befreit wird wie auch ein Gaskreislauf, der stoßweiße oder unterbrochen mit Gas beschickt und von Gas befreit wird.

In dem Gas-Gas-Wärmetauscher 30 wird der verbleibende Anteil der erkaltetem und feuchten Mahlumluft 23' durch die Wärme aufgeheizt, die mit den vereinten Abgasen 32 aus der Vorwärmstufe 35 im zweiten offenen Gaskreislauf 10 aus der Vorwärmstufe 35 entweicht. Dabei werden die vereinten Abgase 32 in einem Staubabscheider 33 von. Rohmehl und von möglicherweise bis in den Staubabscheider 33 gelangten Zementklinkerpartikeln aus dem rechten Anlagenteil befreit, und die vereinten Abgase 32 durchlaufen im zweiten offenen Gaskreislauf 10 dein Gas-Gas-Wärmetauscher 30, wo sie ihre mit sich transportierte Wärme an die erkaltete Mahlumluft 23' in den ersten Gaskreislauf 5 abgeben.

Die vereinten Abgase 32 und die erkaltete, feuchte Mahlumluft 23'; die den Gas-Gas-Wärmetauscher 30 durchströmen, unterscheiden sich stark in ihrer Zusammensetzung, weil die feuchte Mahlumluft 23' weitgehend die Zusammensetzung atmosphärischer Luft aufweist, mit Ausnahme der aufgenommenen Feuchtigkeit aus dem Calciumcarbonat-haltigem Ausgangsmaterial. Hingegen weisen die vereinten Abgase 32 einen sehr hohen CO₂-Anteil auf, der einerseits aus dem Gasanteil des Entsäuerungsgases CO₂ 32a der Entsäuerungsreaktion des Kalksteins gemäß CaCO₃ ↔ CaO + CO₂ und andererseits aus dem Gasanteil des Verbrennungsgases 32b, der aus Verbrennung kohlenstoffhaltigen Brennstoffs gernäß C + O₂ ↔ CO₂ in dem Brenner 56 der Sinterstufe, hier ein Drehrohrofen 40, und schließlich aus dem Gasanteil der Verbrennungsgase 32c der Verbrennung kohlenstoffhaltigen Brennstoffs gemäß oben stehender Gleichung in dem Brenner 60 des Calcinators 55 stammt.

Nachdem die wieder aufgeheizte, feuchte Mahlumluft 23" den Gas-Gas-Wärmetaucher 30 verlassen hat, fließt sie bis an Stelle 41, wo sie sich mit der nahezu gleich temperierten, frischen, trockenen Kühlerabluft 23, die von rechts aus der zweiten Stufe 45b des zweistufigen Kühlers 45 anströmt, vereint, nachdem die trockene Kühlerabluft 23 durch Staubabscheider 46 von Zementklinkerstaub aus dem zweistufigen Kühler 45 befreit wurde, denn der aus dem zweistufigen Kühler 45 stammende Zementklinkerstaub ist stark abrasiv und würde die Mahlstufe 15 vorzeitig durch Abrasion verschleißen. Die aufgeheizte, feuchte Mahlumluft 23" und die frische Kühlerabluft 23 wird sodann von einem Verdichter 47 verdichtet und der Gaskreislauf 5 der trockenen Kühlerabluft 23 und der feuchten Mahlumluft 23' sowie der Mahlumluft 23" mit nahezu der gleichen Zusammensetzung wie atmosphärische Luft schließt sich an dieser Stelle.

Das oben beschriebene Calciumcarbonat-haltige Rohmehl, das durch den Staubabscheider 26 aus der als Trocknungs- und Hebegas verwendeten Mahlumluft 23' abgetrennt wurde, wird durch eine geeignete, hier nicht gezeigte Transportvorrichtung, auf die Vorwärmstufe 35 aufgegeben, wobei das Calciumcarbonat-haltige Rohmehl die Vorwärmstufe 35 von oben nach unten im Gegenström durchläuft, dabei die Zyklonstufen 48, 49 und 50 durchläuft und dabei bis nahe bis zur Temperatur der vereinten Abgase 32 aufgewärmt wird, welche die vereinten Abgase 32 in der zweituntersten Zyklonstufe 50 der Vorwärmstufe 35 aufweisen. Von der zweituntersten Zyklonstufe 50 fällt das aufgeheizte Calciumcarbonat-haltige Rohmehl in den unteren Teil des Calcinators 55 und wird durch die Abgase des Drehrohrofens 40 angehoben, denn in Drehrohrofen 40 heizt ein Brenner 56 den Drehrohrofen 40 durch Verbrennung einer Mischung 57 aus Primärbrennstoff mit Primärluft, wobei die Primärluft idealerweise sauerstoffangereicherte und korrespondierend stickstoffabgereicherte Luft ist. Neben den Abgasen aus der Verbrennung der Mischung 57 wird in den Drehrohrofen 40 Sekundärluft 58 aus der ersten Stufe 45a des zweistufigen Kühlers 45 hineingedrückt, die gemeinsam mit den Abgasen 32b der Verbrennung den Drehrohrofen 40 über den Calcinator 55 verlassen.

Neben den Abgasen 32b und der Sekundärluft 58 aus Drehrohrofen 40 hebt auch die Tertiärluft 59, die ebenfalls aus der ersten Stufe 45a des zweistufigen Kühlers 45 stammt, das aufgeheizte Calciumcarbonat-haltige Rohmehl aus der zweituntersten Zyklonstufe 50 im Calcinator 55 an. Dort wird das Calciumcarbonat-haltige Rohmehl in der zusätzlichen Wärme des Brenners 60, der eine Mischung 61 aus Sekundärbrennstoff und einer sauerstoffangereicherten und korrespondierend stickstoffabgereicherten Luft verbrennt, in einer endothermen Reaktion entsäuert, wobei gasförmiges CO₂ freigesetzt wird und CaO als in den vereinigten Abgasen 32 suspendierter Feststoff zurückbleibt. Die vereinigten Abgase 32 bestehen somit also aus den Abgasen 32b und der Sekundärluft 58 aus Drehrohrofen 40, aus der Tertiärluft 59, Abgasen 32c aus der Verbrennung der Mischung 61 sowie aus freigesetztem Entsäuerungsabgas CO₂ 32a aus der Entsäuerungsreaktion. Zum restlosen Ausbrand der Mischung 61, die im idealen Fall in Calcinator 55 flammlos oxidiert, wird die Suspension aus den vereinigten Abgasen 32 und dem entsäuerten Rohmehl in einer Wirbelkammer 62 innig vermischt, bevor sie von in die unterste Zyklonstufe 63 geleitet wird. In dieser untersten Zyklonstufe 63 trennen sich die vereinigten Abgase 32 von dem weitgehend entsäuerten Rohmehl aus dem Calcinator 55.

Danach verlässt das weitgehend entsäuerte Rohmehl die unterste Zyklonstufe 63 und fällt von dort in die Drehrohrofeneinlaufkammer 65, wo es geschützt vor den aufsteigenden Abgasen des Drehrohrofens 40 in den Drehrohrofen 40 gelangt und dort zu Zementklinker sintert und anschließend den Drehrohrofen 40 verlässt und in die erste Stufe 45a des zweistufigen Kühlers 45 fällt. In der ersten Stufe 45a des zweistufigen Kühlers 45 wird der hier grobkörnige gesinterte Zementklinker durch die im Gaskreislauf 10 rückgeführten und in dem Wärmetauscher 30 abgekühlten vereinigte Abgase 32 gekühlt, wobei sich die vereinigten Abgase 32 stark aufheizen und einerseits als Sekundärluft 58 in den Drehrohrofen 40 und andererseits als Tertiärluft 59 in den Calcinator 55 gelangen und so die erste Stufe 45a des zweistufigen Kühlers 45 wieder verlassen. Dabei trennt der zweistufige Kühler 45 die in der ersten Stufe 45a befindlichen Gase von den Gasen in der zweiten Stufe 45b des zweistufigen Kühlers 45. Eine derartige Trennung ist beispielsweise durch einen sogenannten Mittenbrecher als Gastrennstufe möglich, bei welchem der noch grobkörnige Klinker einen Klinkerbrecher 45c passieren muss, wobei die offenen Gaskreisläufe 5 und 10 durch eine Trennwand weitgehend getrennt werden. Ein minimaler Gasschlupf, der durch mit dem zu zerkleinernden, groben Zementklinker mitgerissenes Gas entsteht, ist dabei in Kauf zu nehmen.

Die vereinigten Abgase 32, die sich in der untersten Zyklonstufe 63 von dem weitgehend entsäuertem Rohmehl trennen, durchlaufen danach die Zyklonstufe 50, danach Zyklonstufe 49 und schließlich Zyklonstufe 48. Nach den Zyklonstufen 50, 49 und 48 durchlaufen die vereinigten Abgase 32 den Staubabscheider 33, von dort aus den Gas-Gas-Wärmetauscher 30, der wie oben beschrieben, die Wärme aus den vereinigten Abgasen 32 auf die feuchte und erkaltete Mahlumluft 23' überträgt, und die vereinigten Abgase 32 werden in einem Verdichter 70 zum Ausgleich des bis hier hin erlittenen Druckverlustes verdichtet und gelangen von dort über einen Teilgasabzug 75 zurück in die erste Stufe 45a des zweistufigen Kühlers 45, wo sich der Gaskreislauf 10 schließt.

Durch den Teilgasabzug 75 verlässt das in Gaskreislauf 10 befindliche, stark CO₂-angereichterte Gas die Anlage 1 bei Stelle 57b/61 b, wobei dieses Gas stets durch die Abgase 32, 32a, 32b, 32c der Verbrennung der Mischungen 57 und 61 in den Brennern 56 und 60 und durch die Entsäuerungsreaktion des Carbonathaltigen Rohmehls nachgeliefert wird.

Aus Teilgasabzug 75 wird nur so viel von den stark CO₂-angereicherten, vereinigten Abgasen 32 abgezogen, wie durch die Einbringung von Verbrennungs- und Entsäuerungsgasen in den offenen Gaskreislauf 10 eingebracht werden, um die Gasmenge in Gaskreislauf 10 konstant zu halten. Dabei wird im Rahmen dieser Offenbarung auch für Gaskreislauf 10 unter einem 'offenen Gaskreislauf' ein Gaskreislauf verstanden, der kontinuierlich mit Gas beschickt und von Gas befreit wird wie auch ein Gaskreislauf, der stoßweiße oder unterbrochen mit Gas beschickt und von Gas befreit wird. Die in Teilgasabzug 75 abgezogenen Gase werden sodann durch Lagerung statt Freisetzen in die Atmosphäre verworfen.

Besonders an der hier beschriebenen Anlage und dem korrespondierenden verfahren ist, dass anstelle der Abgase aus dem Vorwärmer zur Trocknung des Ausgangsmaterials in einer vorgelagerten Mahlstufe, Abluft aus einem Klinkerkühlerfür den fast fertigen Zementklinker verwendet wird, wobei die Wärme aus dem Vorwärmer an diese nicht mit schädlichen Abgasen belastete Kühlerabluft abgegeben wird. Die aus dem Vorwärmer stammenden Abgase werden im Kreislauf der Anlage geführt, wodurch sich gegenüber bekannten Anlagen zur Herstellung von Zementklinker mit Abtrennung des entstehenden CO₂ der Abtrennungsgrad des gesamten im Prozess entstehenden CO₂ weit erhöht.

### BEZUGSZEICHENLISTE

| | | | |
|---|---|---|---|
| 1 | Anlage | 40 | Drehrohrofen |
| 5 | offener Gaskreislauf | 41 | Stelle, Vereinigung Kühler- |
| 10 | offener Gaskreislauf | | abgase 23, 23' |
| 15 | Mahlstufe | 45 | zweistufiger Kühler |
| 20a | Aufgabestelle | 45a | erste Stufe |
| 22 | Stelle, ankommende Kühlerabluft | 45b | zweite Stufe |
| | | 45c | Klinkerbrecher, Gastrennstufe |
| 23 | Kühlerabluft, trocken | | |
| 23' | Mahlumluft, feucht | 46 | Staubabscheider |
| 23" | Mahlumluft, feucht, erwärmt | 47 | Verdichter |
| 25 | Stelle, abgehendes Rohmehl | 48 | Zyklonstufe |
| 26 | Kaskade, Staubabscheider | 49 | Zyklonstufe |
| 27 | Verdichter | 50 | Zyklonstufe |
| 28 | Teilgasabzug | 55 | Calcinator |
| 28a | Kühlerluftzufuhr | 56 | Brenner |
| 28b | Stelle, abgehende Kühlerabluft | 57 | Mischung, Brennstoff |
| | | 57b | Stelle, abgehendes Gas |
| 30 | Gas-Gas-Wärmetauscher | 58 | Sekundärluft |
| 32 | vereinte Abgase | 60 | Brenner |
| 32a | Entsäuerungsgas CO₂ | 61 | Mischung, Brennstoff |
| 32b | Verbrennungsabgas | 61b | Stelle, abgehendes Gas |
| 32c | Verbrennungsabgas | 62 | Wirbelkammer |
| 33 | Staubabscheider | 63 | Zyklonstufe |
| 35 | Vorwärmstufe | 65 | Drehrohrofeneinlaufkammer |
| 70 | Verdichter | 75 | Teilgasabzug |

## Patentansprüche

1. Verfahren zur Herstellung von Zementklinker aufweisend die folgenden Schritte:
- Vorwärmen von Calciumcarbonat-haltigem Rohmehl in einer Vorwärmstufe (35), die durch Abgase einer in Gasströmungsrichtung nachgeschalteten Sinterstufe (40) beheizt wird,
- Entsäuern des vorgewärmten Rohmehls,
- Sintern des entsäuerten Rohmehls zu Zementklinker in einer Sinterstufe (40),
- Kühlen des Zementklinkers aus der Sinterstufe (40) in einer Kühlstufe (45, 45a, 45b), die den Zementklinker mit einem Gas 32) kühlt, **dadurch gekennzeichnet, daß** das Verfahren des Weiteren folgende Schritte aufweist:
- Vereinen der Abgase (32b) der Sinterstufe mit den Abgasen (32a, 32c) des Entsäuerns, und
- Führen der vereinten Abgase (32) im offenen Gaskreislauf (10), der kontinuierlich, stoßweise oder unterbrochen mit Gas beschickt und von Gas befreit wird, wodurch eine Anreicherung von CO₂ aus Verbrennungs- (32b, 32c) und Entsäuerungsgasen (32a) in den im offenen Gaskreislauf (10) geführten vereinten Abgasen (32) entsteht, und
- Wärmeübertragung der Wärme aus den vereinten Abgasen (32), welche die Vorwärmstufe (35) verlassen, in ein im offenen Gaskreislauf (5) geführtes Gas (23', 23"), welches aus dem Gas (23) zur Kühlung des Zementklinkers zur Trocknung des Rohmehls in einer vorgelagerten Mahlstufe (15) entnommen ist.

2. Anlage zur Herstellung von Zementklinker aus Calciumcarbonat-haltigem Rohmehl nach einem der Ansprüche 1 oder 2, aufweisend
- mindestens eine Vorwärmstufe (35) zum Vorwärmen des Calciumcarbonathaltigen Rohmehls, die durch Abgase (32b) einer nachgeschalteten Sinterstufe (40) beheizt wird,
- mindestens einer Stufe (40, 55) zum Entsäuern und Sintern,
- mindestens einer Kühlstufe (45), **dadurch gekennzeichnet daß**
- die mindestens eine Kühlstufe (45, 45a, 45b), mindestens zweistufig ausgebildet ist, wobei
- diese mindestens eine Kühlstufe (45, 45a, 45b) mindestens eine Gastrennstufe 45c zur Trennung von den im offenen Gaskreislauf (10)) geführten Abgasen (32), der kontinuierlich, stoßweise oder unterbrochen mit Gas beschickt und von Gas befreit wird, wodurch eine Anreicherung von CO₂ aus Verbrennungs- (32b, 32c) und Entsäuerungsgasen (32a) in den im offenen Gaskreislauf (10) geführten vereinten Abgasen (32) entsteht, und dem Gas (23) zur Kühlung des Zementklinkers aufweist, und dass
- ein Gas-Gas-Wärmetauscher (30) in Gasströmungsrichtung hinter der Vorwärmstufe (35) angeordnet ist, durch den Wärme aus den vereinten Abgasen (32), welche die Vorwärmstufe (35) verlassen, in ein im Gaskreislauf (5) geführtes Gas (23') zur Trocknung des Rohmehls in einer vorgelagerten Mahlstufe (15) überführt wird, wobei
- das Gas (23) zur Trocknung des Rohmehls dem Gas (23) zur Kühlung des Zementklinkers entnommen ist.

## Claims

1. Method for producing cement clinker, having the following steps:
- preheating calcium carbonate-containing raw meal in a preheating stage (35) which is heated by exhaust gases from a sintering stage (40) which follows in the gas flow direction,
- deacidifying the preheated raw meal,
- sintering the deacidified raw meal into cement clinker in a sintering stage (40),
- cooling the cement clinker from the sintering stage (40) in a cooling stage (45, 45a, 45b) which cools the cement clinker by means of a gas (32),
**characterized in that** the method furthermore has the following steps:
- combining the exhaust gases (32b) from the sintering stage with the exhaust gases (32a, 32c) from deacidification, and
- routing the combined exhaust gases (32) in the open gas circuit (10) which is continuously, batchwise or interruptedly fed with gas and freed of gas, as a result of which
- an enrichment of CO₂ from combustion (32b, 32c) and deacidification (32a) gases occurs in the combined exhaust gases (32) routed in the open gas circuit (10), and
- transferring heat from the combined exhaust gases (32) which leave the preheating stage (35) into a gas (23', 23") which is routed in the open gas circuit (5) and which is extracted from the gas (23) for cooling the cement clinker in order to dry the raw meal in a preceding grinding stage (15).

2. Plant for producing cement clinker from calcium carbonate-containing raw meal according to Claim 1, having
- at least one preheating stage (35) for preheating the calcium carbonate-containing raw meal, which preheating stage is heated by exhaust gases (32b) from a following sintering stage (40),
- at least one stage (40, 55) for deacidification and sintering,
- at least one cooling stage (45), **characterized in that**
- the at least one cooling stage (45, 45a, 45b) is of at least two-stage design, wherein
- this at least one cooling stage (45, 45a, 45b) has at least one gas separation stage (45c) for separating the exhaust gases (32) routed in the open gas circuit (10), which is continuously, batchwise or interruptedly fed with gas and freed of gas, as a result of which an enrichment of CO₂ from combustion (32b, 32c) and deacidification (32a) gases occurs in the combined exhaust gases (32) routed in the open gas circuit (10), and the gas (23) for cooling the cement clinker, and **in that**
- a gas/gas heat exchanger (30) is arranged downstream of the preheating stage (35) in the gas flow direction, through which gas/gas heat exchanger heat from the combined exhaust gases (32) which leave the preheating stage (35) is transferred into a gas (23'), routed in the gas circuit (5), for drying the raw meal in a preceding grinding stage (15),
- the gas (23) for drying the raw meal being extracted from the gas (23) for cooling the cement clinker.

## Revendications

1. Procédé de fabrication de clinker de ciment, présentant les étapes suivantes:
- préchauffer une farine crue contenant du carbonate de calcium dans une étape de préchauffage (35), qui est chauffée par des gaz d'échappement d'une étape de frittage (40) disposée en aval dans la direction d'écoulement des gaz,
- désacidifier la farine crue préchauffée,
- fritter la farine crue désacidifiée en clinker de ciment dans une étape de frittage (40),
- refroidir le clinker de ciment issu de l'étape de frittage (40) dans une étape de refroidissement (45, 45a, 45b), qui refroidit le clinker de ciment avec un gaz (32),
**caractérisé en ce que** le procédé comporte en outre les étapes suivantes:
- réunir les gaz d'échappement (32b) de l'étape de frittage avec les gaz d'échappement (32a, 32c) de la désacidification, et
- conduire les gaz d'échappement réunis (32) dans le circuit de gaz ouvert (10), qui est alimenté en gaz et débarrassé de gaz en continu, par à-coups ou de façon interrompue, créant ainsi un enrichissement en CO₂ provenant de gaz de combustion (32b, 32c) et de désacidification (32a) dans les gaz d'échappement réunis (32) conduits dans le circuit de gaz ouvert (10), et
- transmettre thermiquement la chaleur provenant des gaz d'échappement réunis (32), qui quittent l'étape de préchauffage (35), à un gaz (23', 23") conduit dans le circuit de gaz ouvert (5), qui est prélevé dans le gaz (23) pour le refroidissement du clinker de ciment pour le séchage de la farine crue dans une étape de broyage disposée en amont (15).

2. Installation de fabrication de clinker de ciment à partir de farine crue contenant du carbonate de calcium selon la revendication 1, présentant
- au moins une étape de préchauffage (35) pour le préchauffage de la farine crue contenant du carbonate de calcium, qui est chauffée par des gaz d'échappement (32b) provenant d'une étape de frittage (40) disposée en aval,
- au moins une étape (40, 55) pour la désacidification et le frittage,
- au moins une étape de refroidissement (45),
**caractérisée en ce que**
- ladite au moins une étape de refroidissement (45, 45a, 45b) est réalisée avec au moins deux étages, dans laquelle
- cette au moins une étape de refroidissement (45, 45a, 45b) présente au moins une étape de séparation des gaz (45c) pour la séparation des gaz d'échappement (32) conduits dans le circuit de gaz ouvert (10), qui est alimenté en gaz et débarrassé de gaz en continu, par à-coups ou de façon interrompue, créant ainsi un enrichissement en CO₂ provenant de gaz de combustion (32b, 32c) et de désacidification (32a) dans les gaz d'échappement réunis (32) conduits dans le circuit de gaz ouvert (10), et un gaz (23) pour le refroidissement du clinker de ciment, et **en ce que**
- un échangeur de chaleur gaz-gaz (30) est disposé après l'étape de préchauffage (35) dans la direction d'écoulement du gaz, par lequel de la chaleur est transmise à partir des gaz d'échappement réunis (32), qui quittent l'étape de préchauffage (35), dans un gaz (23') conduit dans le circuit de gaz (5) pour le séchage de la farine crue dans une étape de broyage disposée en amont (15), dans laquelle
- le gaz (23) pour le séchage de la farine crue est prélevé dans le gaz (23) pour le refroidissement du clinker de ciment.
